# EUROPÄISCHE PATENTSCHRIFT

(11) **EP 2 088 906 B1**
(45) Veröffentlichungstag und Bekanntmachung des Hinweises auf die Patenterteilung: **05.04.2017**
(21) Anmeldenummer: 07846497.1
(22) Anmeldetag: 18.10.2007
(51) Int. Cl.: A47J 31/60

(54) **TANK MIT FILTERPATRONE**
TANK WITH FILTER CARTRIDGE
RÉSERVOIR AVEC CARTOUCHE FILTRANTE

(30) Priorität: 23.10.2006 DE 102006050302
(43) Veröffentlichungstag der Anmeldung: 19.08.2009
(73) Patentinhaber: Aquis Wasser-Luft-Systeme GmbH Lindau, Zweigniederlassung Rebstein, 9445 Rebstein (CH)
(72) Erfinder: WAWRLA, Andreas, 9443 Widnau (CH); WALLERSTORFER, Kurt, 5204 Strasswalchen (AT)
(74) Vertreter: Otten, Roth, Dobler & Partner mbB Patentanwälte
(86) Internationale Anmeldenummer: PCT/EP2007/009038
(87) Internationale Veröffentlichungsnummer: WO 2008/049547

(56) Entgegenhaltungen:
- CA-A1- 2 230 436
- CH-A- 432 395
- DE-A1- 3 014 493
- US-A- 3 206 033

## Beschreibung

Die Erfindung betrifft einen Tank mit Filterpatrone, nach dem Oberbegriff des Anspruchs 1 und ein Gerät mit Tank und Filterpatrone nach dem Oberbegriff des Anspruchs 14.

In verschiedenen Maschinen, beispielsweise in Kaffee- oder Espressomaschinen wird ein Wassertank zur Bevorratung einer Flüssigkeit, im Falle von Kaffee- oder Espressomaschinen zur Bevorratung von Wasser, vorgesehen, wobei eine Filterpatrone in den Tank einsetzbar ist, um das Wasser vor der Verarbeitung in der Maschine aufzubereiten. Bekannte Filterpatronen weisen im unteren Bereich einen Einlass auf, durch den das Wasser seitens der zugehörigen Maschine angesaugt wird. Hierbei wird das Wasser über ein Filterbett geleitet und gelangt über einen Anschluss der Filterpatrone an einen entsprechenden Geräteanschluss des Wassertanks, der häufig als Sauganschluss ausgebildet ist, in die Maschine.

Dieser Geräteanschluss des Wassertanks ist bei handelsüblichen Ausführungen in der Regel bodenseitig ausgebildet. Dadurch ergibt sich einerseits eine leichte Entleerung des Tanks und andererseits kann die Herstellung solcher Tanks, die in der Regel aus Kunststoff gespritzt werden, durch eine einfache Formgebung der benötigten Spritzmittel relativ kostengünstig hergestellt werden. Auch ein Einbau von Filtern zur Bereitstellung von für den Betrieb der Maschine entsprechend aufbereitetem Wasser, z.B. in der Form von Steckfiltern, ist hierbei unkompliziert und kostengünstig realisierbar.

Zur Bedienung sind solche Ausführungsformen in der Richtung nach oben und/oder seitlich aus dem betreffenden Gerät zu entnehmen bzw. in umgekehrter Richtung wieder einzusetzen. Aufgrund oftmals beengter Gegebenheiten für den Betrieb der Maschine und/oder für die Unterbringung des Tanks an der Maschine sind diese daher oft nur unzureichend verwendbar.

Andererseits ist es für einen zuverlässigen Betrieb der Maschine von großer Bedeutung, dass eine in ihren Filterparametern definierte Filterpatrone verwendet wird. Durch eine mangelhafte Filterpatrone wird der Maschine unzureichend oder falsch aufbereitetes Wasser zugeführt, was zu negativen Auswirkungen, beispielsweise Verkalkung oder dergleichen, bis hin zu Maschinendefekten führen kann. Die Maschinensteuerung ist nicht in der Lage, rechtzeitig die vorgesehenen Wartungsintervalle einzuleiten, wenn sie von einer Filterpatrone des korrekten Typs ausgeht, diese jedoch tatsächlich nicht verwendet wird. Bei der Verwendung ungenügender Filterpatronen kommt es zu Problemen nicht nur in der Betriebssicherheit der Maschine, sondern auch in Fragen der Gewährleistung usw.. Es ist daher von großer Bedeutung, sicherzustellen, dass stets nur zugelassene Filterpatronen zum Einsatz kommen.

Der Erfindung liegt daher die Aufgabe zugrunde, einen Tank mit einer Filterpatronen und ein Gerät nach der eingangs dargelegten Art zu verbessern.

Die Lösung dieser Aufgabe erfolgt ausgehend von den Oberbegriffen durch die kennzeichnenden Merkmale der Ansprüche 1 und 14. In den abhängigen Ansprüchen sind vorteilhafte und zweckmäßige Weiterbildungen angegeben.

Dementsprechend zeichnet sich ein Tank für flüssigkeitsführende Geräte, insbesondere wasserführende Haushaltsgeräte wie Getränkeautomaten, insbesondere Kaffeeautomaten, Trinkwasserspender, Koch- und Backgeräte, Dampfgeräte, insbesondere Dampfbügeleisen, Dampfreiniger, Hochdruckreiniger, Luftreiniger und -konditionierer oder dgl., mit einem Filterpatronenanschluss dadurch aus, dass ein mit einer überwiegend horizontalen Einsetzbewegung anschließbarer Geräteanschluss mit für eine innenseitig in den Tank einsetzbare Filterpatrone vorgesehenen Anschlusselementen verbunden ist.

Hierdurch ist z.B. die Realisierung eines sogenannten "Schubladentanks" mit seitlichem Anschluss zwischen Maschine und Tank möglich, der insbesondere in platz- bzw. raumsparenderweise von vorne oder von einer bevorzugten Seite her zur Bereitstellung des benötigten Wassers in das Gerät eingeschoben bzw. zur Wiederauffüllung und/oder Wartung wieder entnommen werden kann.

In einer bevorzugten Ausführungsform weist der tankseitige Filterpatronenanschluss und/oder ein filterseitiger Tankanschluss einen Ablaufrand auf, der eine Ebene definiert, die in Bezug zu einer im Betriebszustand des Wasservorratstanks vertikalen Ebene schräg ausgerichtet ist.

Die Anordnung des entsprechenden Filters mit schrägem Anschluss bzw. schräger Dichtfläche in einem derart ausgebildeten Tank überwindet gleich mehrere Probleme. Denn normalerweise bedarf die Handhabung des Filters beim Einsetzen bzw. Wiederentnehmen aufgrund einer abgewinkelten Anschlussgeometrie gewisser Übung bzw. Feinmotorik. Durch die erfindungsgemäße schräge Geometrie der tank- und filterpatronenseitigen Anschlüsse und einer dazwischen liegenden und/oder ausgebildeten Dichtfläche, die zugleich sehr positioniertolerant ist, kann die Filterpatrone jedoch wie bei bodenseitigen Tankauslässen einfach senkrecht oder waagrecht aufgesteckt werden. Aber auch eine Schwenkbewegung zum Einsetzen bzw. Entnehmen der Filterpatrone mittels einer entsprechenden Halterung und/oder Führung eignet sich hierfür besonders gut.

In einer bevorzugten Ausführungsform kann der tankseitige Filterpatronenanschluss hierzu in einer Kante zwischen einer Seitenwand und dem Boden des Tanks derart ausgebildet sein, dass er diese beiden miteinander verbindend den in einer schrägen Ebene liegenden Ablaufrand ausbildet, z.B. in einem Winkelbereich von 30 bis 60°.

Besonders vorteilhaft ist es, wenn der tiefste Punkt des Ablaufrandes möglichst nahe am Boden des Tanks endet, so dass sich hieraus eine möglichst geringe, vorzugsweise gar keine, nicht nutzbare Todwassermenge im Tankvolumen ergibt, auch wenn der überwiegend horizontal ausgerichtete Geräteanschluss des Wassertanks seitlich an einer Tankwand ausgebildet ist. Hierbei ist es jedoch nicht zwingend erforderlich, dass Boden- und/oder Seitenwände exakt eine rechtwinkelige Ausrichtung in einem kartesischen Koordinatensystem aufweisen. Je nach Anwendungsfall können diese durchaus auch selbst gewisse Neigungen gegenüber der Horizontalen bzw. der Vertikalen aufweisen, um z.B. einen besseren Wasserabfluss und/oder eine bessere Anpassung an räumliche Gegebenheiten zu ermöglichen.

Ein weiterer Vorteil einer derartigen schrägen Ausrichtung der Tank- und Filterpatronenanschlüsse sowie der dazwischen liegenden Dichtfläche liegt darin, dass die Filterpatrone zum Einsetzen in den Tank bzw. wieder zum Entnehmen mit einer überwiegend geraden, im Wesentlichen senkrechten Einschiebe- bzw. Ausziehbewegung montiert bzw. demontiert werden kann. Besonders vorteilhaft wird hierzu eine Filterpatronenhalterung und/oder Filterpatronenführung mit einem überwiegend vertikal ausgerichteten Führungsabschnitt vorgeschlagen. Damit ist ein exaktes und definiertes Aufsetzen des filterseitigen Tankanschlusses an den tankseitigen Filterpatronenanschluss gewährleistet.

Gegebenenfalls kann die Filterpatronenhalterung und/oder Filterpatronenführung zur zusätzlichen Erleichterung der Filterpatronenbestückung im Einführbereich einen Zentrierabschnitt aufweisen, so dass sich die komplementäre, an der Filterpatrone ausgebildete Befestigungsstruktur im Grunde "selbst fängt".

Um eine gute Anlage des filterseitigen Tankanschlusses an den tankseitigen Filteranschluss zu ermöglichen, insbesondere zur Bereitstellung einer schräg ausgerichteten Dichtfläche, wird im Weiteren die Ausbildung einer planen Anlagefläche am tankseitigen Filterpatronenanschluss vorgeschlagen. Eine solch plane, in Bezug auf die Einschubbewegung schräg ausgerichtete Anlagefläche weist besonders positionstolerante Eigenschaften auf, da eine überwiegend parallele, relative Verschiebebewegung bei der Berührung des filterseitigen Tankanschlusses mit dieser planen Anlagefläche während der im Wesentlichen vertikalen Einschiebebewegung des Filters auftritt. Dadurch kann um den ganzen Umfang der Berührungsfläche ein im Wesentlichen gleichmäßiger Andruck erzielt werden, auch dann, wenn sich die beiden Berührflächen relativ gegeneinander verschieben. Grundsätzlich ist aber auch eine nicht ebene Dichtfläche verstellbar, die ebenfalls schräg ausgerichtet angeordnet sein kann.

Besonders bevorzugt weist auch der filterseitige Tankanschluss eine solche plane Anlagefläche auf, insbesondere zur Ausbildung einer Dichtfläche, und insbesondere bevorzugt auch mit der gleichen Schrägausrichtung. Damit kann eine erste Ausführungsform einer Dichtung zwischen dem tankseitigen Filterpatronenanschluss und dem filterseitigen Tankanschluss in einer besonders einfach herzustellenden, einfach zu bedienenden und dennoch zuverlässig wirkenden Weise zur Verfügung gestellt werden.

Eine Verbesserung dieser Dichtwirkung kann mit einfachen Maßnahmen dadurch erreicht werden, dass mindestens ein elastisch verformbarer Bereich an einer der beiden, vorzugsweise als Dichtflächen realisierten Anlageflächen ausgebildet ist, vorzugsweise mit einer leichten Vorspannung gegenüber der ihm komplementären Anlagefläche des jeweils anderen Anschlusses. Dadurch kann der betreffende Flächenbereich allein durch das Gewicht der Filterpatrone und/oder durch einen gegebenenfalls von einer Fixierung der Filterpatrone herrührenden Andruck dichtend vorgespannt werden.

In einer demgegenüber etwas gehobeneren Ausführungsform ist auch die Verwendung einer zusätzlichen Dichtung vorstellbar, bei der ebenfalls besonders bevorzugt mindestens ein elastisch verformbarer Abschnitt vorgesehen ist. Hierdurch kann sich die Dichtung besonders vorteilhaft durch eine Saugwirkung während des Betriebs des Filters, ihre Dichtwirkung verbessernd, noch kräftiger gegen die ihr zugeordnete Anlagefläche pressen. Bei einem solch elastisch verformbaren Abschnitt kann es sich z.B. um einen im Querschnitt der Dichtung in etwa lippenförmigen Ring handeln, der beispielsweise an seinem äußeren Randbereich anliegt und aufgrund der durch einen im Inneren des Abflussbereiches erzeugten Unterdruck seine wirksame Dichtfläche gegenüber der Anlagefläche vergrößert. Als Ausführungsbeispiel sei hier eine sogenannte "V-Dichtung" genannt. Durch diese schräg ausgerichteten Dichtungsausführungen kann eine besonders einfach handhabbare Axialdichtung realisiert werden, welche hinsichtlich einer exakten Positionierung der beiden Dichtkomponenten zueinander sehr fehlertolerant ist.

Auch mittels einer Radialdichtung könnte ein tankseitiger Filterpatronenanschluss für einen filterseitigen Tankanschluss realisiert werden. Hierzu könnten beispielsweise zwei zumindest in einem kurzen Bereich koaxial zueinander ausgerichtete Anschlusselemente des tankseitigen Filterpatronenanschlusses bzw. des filterseitigen Tankanschlusses gegeneinander abgedichtet werden. In einer ersten möglichen Ausführungsform könnte hierzu beispielsweise ebenfalls eine dem komplementären Rohrabschnitt zugewandte Lippe, vorzugsweise ebenfalls etwas elastisch ausgebildet, vorgesehen sein. In einer anderen Ausführungsform ist auch die Verwendung eines O-Rings vorstellbar, der zwischen diesen beiden koaxial zueinander ausgerichteten Anschlussabschnitten positioniert ist. Eine hierzu vorgesehene Filterpatronenhalterung und/oder Filterpatronenführung könnte ebenfalls im Wesentlichen einen überwiegend vertikal ausgerichteten Führungsabschnitt aufweisen, welcher gegebenenfalls jedoch am Ende des Führungsabschnittes eine Überlagerung der im Wesentlichen senkrechten Führungsbewegung durch eine Querbewegung zur Ineinanderführung der koaxialen Anschlussabschnitte erfahren könnte, sofern erforderlich.

Für beide Ausführungsformen von Filterpatronenhalterungen und/oder Filterpatronenführungen kann zusätzlich eine Fixierung der Filterpatrone in ihrer Endstellung vorgesehen sein, z.B. realisiert durch einen Schnappmechanismus oder dergleichen.

Auch jegliche Arten von Dichtungen aus Moosgummi sind zur Verwendung für die oben beschriebenen radialen bzw. axialen Dichtungen geeignet.

Eine weitere mögliche Ausführungsform für die Dichtung kann durch die Ausbildung eines Formschlusses zwischen dem tankseitigen Filterpatronenanschluss und dem filterseitigen Tankanschluss realisiert werden, wie zum Teil bereits oben durch die beiden planen Anlageflächen an den tank- und filterseitigen Anschlüssen beschrieben. Weiterhin vorstellbar ist aber auch ein den schräg ausgerichteten Ablaufrand des tankseitigen Filterpatronenanschlusses umrandendes Element, z.B. in der Form eines Zylinders, in der Form eines Dreieckes, in der Form eines Viereckes, eines Vieleckes oder dergleichen. Vorzugsweise weisen die dem komplementären Formschlusselement zugewandten Flächen eine leicht konische Ausrichtung auf, so dass bei ihrer Zusammenfügung mit fortschreitender Bewegung ein sich verstärkender Klemmeffekt zwischen den jeweiligen Anlageflächen entsteht, insbesondere bevorzugt mit Dichtwirkung.

Um sicherzustellen, dass nur für das jeweilige, wasserführende Gerät vorgesehene Filterpatronen mit diesem Tank verwendet werden, wird im Weiteren bevorzugt eine mechanische Kodierungsstruktur zwischen dem tankseitigen Filterpatronenanschluss und der Filterpatrone und/oder der Dichtung vorgeschlagen. Aber auch zwischen der Dichtung und der Filterpatrone könnte eine solche Kodierungsstruktur ausgebildet sein. Die Kodierungsstruktur selbst kann beispielsweise in einer ersten Ausführungsform als Verzahnung ausgebildet sein, so dass nur entsprechend zueinander passende Zähne bzw. entsprechende Aussparungen eine ordnungsgemäße Festsetzung der Filterpatrone in dem Tank zulassen. Auch die oben beschriebene Formschluss-Verbindung zwischen dem tankseitigen Filterpatronenanschluss und dem filterseitigen Tankanschluss eignen sich als mechanische Kodierungsstruktur. So kann der filterseitige Tankanschluss sowohl als Kodierungsstruktur als auch als Formdichtung mit entsprechend ausgebildeter Umfangsfläche zur Verfügung gestellt werden.

Durch die Kodierung ist es im Weiteren möglich, in bestimmten Anwendungsfällen Patronen mit speziell dafür vorgesehenen Filtern zuzuordnen. Beispielsweise können für verschiedene Geräte verschiedene Enthärtungsstufen und/oder die Beimengung gegebenenfalls zusätzlicher Additive, wie z.B. die Beimengung von Nahrungsmittelergänzungen, beispielsweise in Form von Vitamin C oder dergleichen, vorgesehen sein. Auch die Bereitstellung eines Aktivkohlefilters in der Filterpatrone kann durch eine derartige Kodierung beeinflusst werden.

Nicht richtig oder nicht kodierte Filterpatronen können somit vom Betrieb mit dem Tank ausgeschlossen werden.

In einer besonders bevorzugten Ausführungsform kann die Kodierungsstruktur auch wenigstens teilweise zugleich als Fixierungselement zur Befestigung der Filterpatrone vorgesehen sein. Insbesondere vorteilhaft ist dies beispielsweise bei der oben beschriebenen Formschluss-Verbindung möglich.

Um den Tank möglichst optimal in seinem Volumen nutzen zu können, wird die Ausbildung eines Wassereinlasses an der Filterpatrone vorgeschlagen, bei dem im Gehäuse der Filterpatrone eine Einlassöffnung auf der Höhe des Leerpegels des Tanks vorgesehen ist, durch welche das Wasser in die Filterpatrone gelangt. Wenn die Filterpatrone selbst im Betriebszustand bis zum Boden des Tanks reicht, so kann eine nahezu vollständige Entleerung des Wassertanks erreicht werden, vorausgesetzt, dass eine entsprechende Zulaufmöglichkeit, z.B. in der Form von Zulaufkanälen oder dergleichen, zum Wassereinlass der Filterpatrone vorgesehen ist.

Für die Filterung wird es als besonders bevorzugt angesehen, wenn ein im Aufstromverfahren und/oder einem Abstromverfahren wirksamer Filterabschnitt vorgesehen ist. Insbesondere die Anordnung einer Trennwand im Inneren eines entsprechenden Filtergehäuses eignet sich hervorragend als Grundvoraussetzung für dieses Verfahren. Bei einer solchen Aufteilung ist es beispielsweise auch leicht möglich, den Filter entsprechend des jeweils vorgesehenen Anwendungszweckes mit unterschiedlichen Filtermaterialien und/oder Zusatzstoffen zu befüllen. Durch die Variierung der Position der Trennwand im Inneren des Gehäuses bzw. des jeweiligen Volumenverhältnisses kann beispielsweise auch ein jeweils entsprechendes Volumen für ein bestimmtes Filtermaterial zur Verfügung gestellt werden, wobei auch eine Mehrkammeraufteilung im Inneren des Filtergehäuses für eine zur Verfügungsstellung mehrerer, vorzugsweise unterschiedlicher Filterstrecken möglich ist.

Denkbar sind aber auch Horizontal- und/oder Tangentialstrom-Filterverfahren, gegebenenfalls auch in Kombination mit Auf- und/oder Abstromverfahren.

Neben dem bisher beschriebenen Tank betrifft die vorliegende Erfindung auch einen Filter zur Verwendung in einem Tank für wasserführende Geräte entsprechend einer oder mehrerer der oben dargelegten Ausführungsformen, welcher Filter sich dadurch auszeichnet, dass ein zum Anschluss an den tankseitigen Filterpatronenanschluss ausgebildeter, filterseitiger Tankanschluss vorgesehen ist.

Zusätzlich betrifft die vorliegende Erfindung auch noch ein Gerät, insbesondere ein wasserführendes Haushaltsgerät oder ein Gerät zur Aufbereitung von Speisen und/oder Getränken, wie Getränkeautomaten, insbesondere Kaffeeautomaten, Trinkwasserspender, Koch- und Backgeräte, Dampf- und/oder Hochdruckreiniger, Luftreiniger und -konditionierer oder dergleichen mit einem Tank, das sich dadurch auszeichnet, dass der Tank nach einem der oben genannten Merkmale ausgebildet ist.

### Ausführungsbeispiel

Die vorliegende Erfindung wird nachfolgend anhand der Figuren und der darauf Bezug nehmenden Beschreibung näher erläutert.

Es zeigen
- Figur 1: schematisch eine perspektivische Ansicht auf einen Tank für wasserführende Geräte, insbesondere Haushaltsgeräte, mit einem horizontal ausgerichteten Geräte-Tankanschluss und einer vertikal im Tank eingesetzten Filterpatrone,
- Figur 2: die Anordnung aus Figur 1 schematisch in perspektivischer Draufsicht dargestellt,
- Figur 3: eine vergrößerte Darstellung des Tanks entsprechend der Figur 2 mit entnommener Filterpatrone und einem darin angeordneten, tankseitigen Filterpatronenanschluss in einer ersten Ausführungsform,
- Figur 4: schematisch eine Schnittdarstellung entlang eines Längsschnittes des Tanks in perspektivischer Ansicht von unten mit fehlender Vorderwand,
- Figur 5: schematisch eine abschnittsweise Längsschnittdarstellung der Anordnung nach der Figur 1,
- Figur 5a: schematisch einen Querschnitt durch eine in der Figur 5 gezeigte Dichtung,
- Figur 6: schematisch eine perspektivische Ansicht einer Filterpatrone,
- Figuren 7+8: jeweils weitere Schnittdarstellungen des Tanks und des Filters entsprechend der Figur 1 in unterschiedlichen Ansichten,
- Figuren 9+10: weitere Darstellungen entsprechend der Figuren 5 und 6, jedoch mit einer demgegenüber abgewandelten Ausführungsform einer Dichtung in der Form eines O-Rings,
- Figur 11: schematisch eine ausschnittsweise Draufsicht auf einen Befestigungs- und Kodierungsbereich zwischen dem Tank und der Filterpatrone,
- Figuren 12-17: eine weitere Ausführungsform eines Wassertanks und einer zugehörigen Filterpatrone mit einem gegenüber der ersten Ausführungsform abgewandelten, tankseitigen Filterpatronenanschluss und einem abgewandelten Tankanschluss in unterschiedlichen schematischen Darstellungen und
- Figur 18: eine weitere ausschnittsweise Schnittdarstellung für eine mögliche Ausführungsform einer Filterpatronenhalterung und/oder -führung bzw. -montagemöglichkeit.

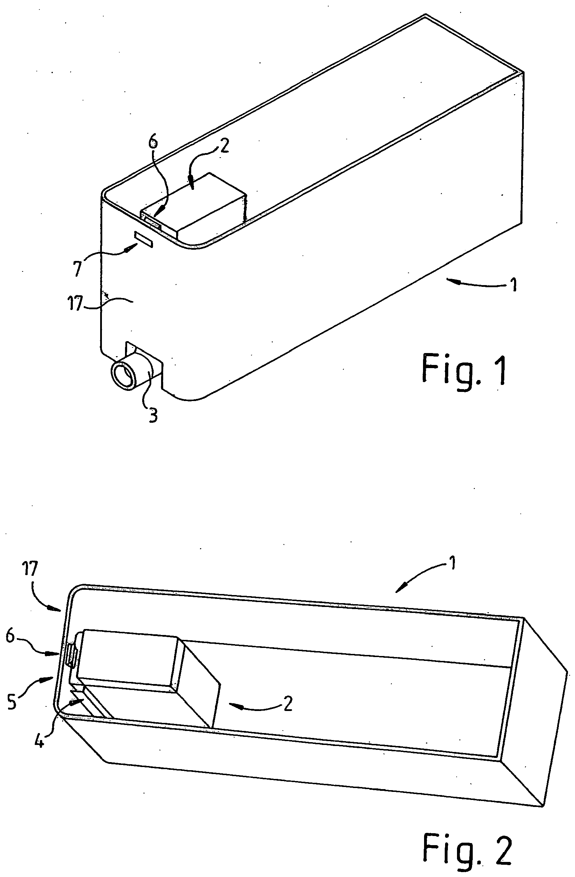

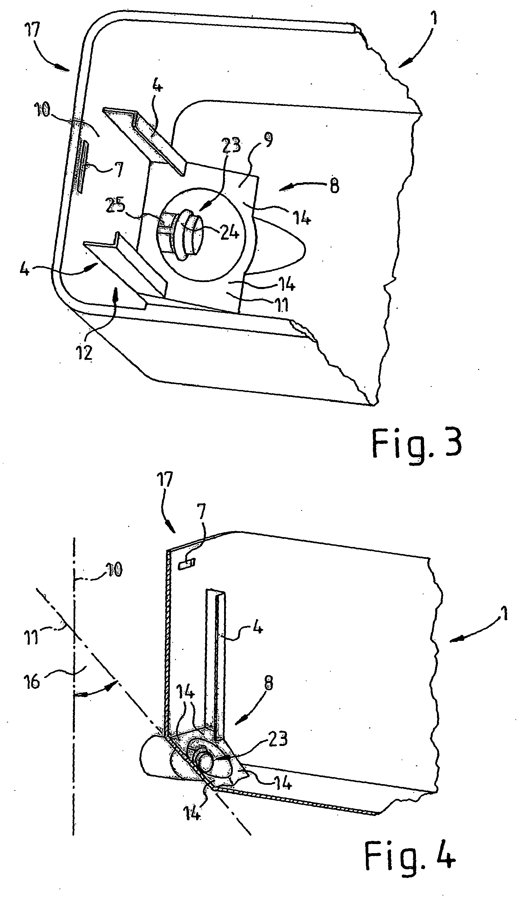

Dementsprechend zeigt die Figur 1 schematisch eine perspektivische Draufsicht auf einen Tank 1 für wasserführende Geräte, insbesondere Haushaltsgeräte, mit einem Filterpatronenanschluss 8 (Figur 3) und einem überwiegend horizontal ausgerichteten Geräteanschluss 3. Solche Tanks werden auch als "Schubladentank" bezeichnet und sind vorzugsweise für die Anwendung bei beengten Raumverhältnissen vorgesehen. Ein Vorteil solcher Schubladentanks liegt darin, dass sie von vorne in das betreffende Gerät eingesetzt bzw. wieder aus diesem entnommen werden können. Die Verbindung mit der wasserverarbeitenden Einheit des Gerätes erfolgt in der Regel, jedoch nicht zwangsweise, über eine Sauganschlussleitung, mit welcher der Geräteanschluss 3 beim Einschieben des Tankes 1 in das Gerät (nicht dargestellt) Wasser leitend und nach außen dichtend verbunden wird.

Die Figur 2 zeigt schematisch in perspektivischer Draufsicht die Befestigung der Filterpatrone 2 am Tank 1 mittels einer Filterpatronenhalterung und/oder -führung 4. Diese ist in der Form einer von zwei im Wesentlichen vertikal an der Stirnwand 5 angeordneten Schienen dargestellt. Im Weiteren ist eine Fixierung 6 gezeigt, die im vollständig eingeschobenen Zustand der Filterpatrone 2, beispielsweise als Schnappmechanismus, in eine Ausnehmung 7 in der Stirnwand 5 einrastet, vorzugsweise federelastisch.

Die Figur 3 zeigt perspektivisch eine Draufsicht auf den Filter 1 mit einem tankseitigen Filterpatronenanschluss 8, der erfindungsgemäß einen Ablaufrand 9 aufweist, der in Bezug zu der vertikal ausgerichteten Stirnwand 5 schräg ausgerichtet ist.

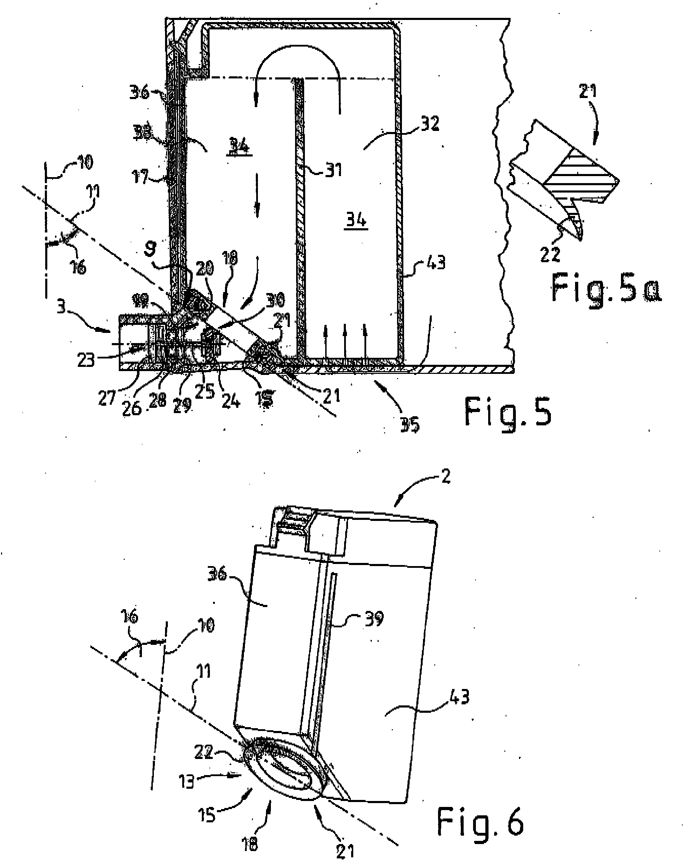

Hierdurch kann die Filterpatrone 2 entlang des vertikal ausgerichteten Führungsabschnittes 12 mit einer einfachen Einschubbewegung in den Tank 1 eingeführt werden, bis eine gute Anlage zwischen dem tankseitigen Filteranschluss 8 und dem filterseitigen Tankanschluss 13 (Figur 6) vorliegt. Zur Verbesserung der guten Anlage, und insbesondere zur Ausbildung einer schräg ausgerichteten Dichtfläche 42, weist der tankseitige Filterpatronenanschluss eine plane Anlagefläche 14 auf. Um eine besonders gute Anlage bzw. Dichtfunktion zwischen den beiden Anschlusselementen zu erreichen, kann auch der filterseitige Tankanschluss 13 besonders bevorzugt eine plane Anlagefläche 15 aufweisen. Diese beiden planen Anlageflächen 14, 15 weisen eine große Positionstoleranz auf, da sie auch dann dichten, wenn die beiden zueinander korrespondierenden Wasserdurchführungen des tankseitigen Filterpatronenanschlusses und des filterseitigen Tankanschlusses nicht exakt übereinander positioniert sind, sondern gegebenenfalls in der durch beide Flächen verlaufenden Ebene parallel zueinander verschoben sind.

Die plane Anlagefläche 15 des filterseitigen Tankanschlusses 13 kann je nach Ausführungsform der Filterpatrone durch unterschiedliche Flächen realisiert werden. In einer ersten Ausführungsform ist es denkbar, dass diese plane Anlagefläche 15 direkt durch die Stirnseite 17 der Auslassöffnung 18 der Filterpatrone 2 ausgebildet ist. In diesem Fall ist es erforderlich, dass diese Stirnseite 17 eine derart große, flächige Ausdehnung hat, so dass sie bei Einschieben der Filterpatrone 2 und einem dabei auftretenden parallelen Versatz zwischen der Auslassöffnung 18 und der korrespondierenden Auslassöffnung 19 am tankseitigen Filterpatronenanschluss in jeder Stellung eine ausreichende Überdeckung gewährleisten kann. Insbesondere gilt dies für solche Ausführungsformen, bei denen die planen Anlageflächen 14, 15 gleichzeitig eine Abdichtung dieses Bereichs realisieren, gegebenenfalls mit einem elastisch verformbaren, vorzugsweise lippenförmigen Anlagebereich. Ein solcher lippenförmiger Anlagebereich könnte gegebenenfalls auch unter einer gewissen Vorspannung stehen und leicht der ihr komplementären anderen planen Anlagefläche leicht entgegengerichtet ausgebildet sein. Dadurch ist eine Erhöhung der Dichtwirkung durch das Anpressen beim Fixieren der Filterpatrone möglich.

In einer demgegenüber abgewandelten Ausführungsform ist es auch vorstellbar, dass die plane Anlagefläche 15 des filterseitigen Tankanschlusses 13 durch eine die Auslassöffnung 18 umrandende Schulter 20 ausgebildet ist. Auch für diese gilt, dass sie so groß ist, dass eine ausreichend große Überdeckung ihres Anlagebereichs mit dem Anlagebereich der planen Anlagefläche 14 des tankseitigen Filterpatronenanschlusses 8 gewährleistet ist.

In einer weiteren Ausführungsform kann aber auch eine Dichtung 21 zwischen dem tankseitigen Filterpatronen 8 und dem filterseitigen Tankanschluss 13 vorgesehen sein, welche entweder selbst an einer solchen planen Anlagefläche aufliegt oder eine solche ausbilden kann, vorzugsweise wiederum in Kombination mit einem leicht vorgespannten, der komplementären Anlagefläche leicht entgegengehend ausgerichtet ausgebildetem zusätzlichen Dichtabschnitt 22 (Figur 5 und 5a).

Die Figur 4 zeigt eine Schnittdarstellung entlang eines Längsschnittes durch den Tank 1. Dieser Schnitt verläuft in etwa in der Mitte des linken bzw. unteren Randes des tankseitigen Filterpatronenanschlusses 8 in der Darstellung der Figur 3. In beiden Abbildungen ist das Ventil 23 des tankseitigen Geräteanschlusses 3 sowie dessen Dichtung 24 und dessen Schaft 25 gut erkennbar.

Zur besseren Verdeutlichung der schrägen Ausrichtung des tankseitigen Filterpatronenanschlusses 8 gegenüber der vertikalen Ebene 10 sind in den Figuren 4 bis 6 stellvertretend Linien 10 bzw. 11 eingezeichnet, die zwischen sich den Winkel 16 entsprechend der jeweiligen schrägen Ausrichtung dieser beiden Flächen gegeneinander dargestellt.

In der Figur 5 ist zum Ventil 23 noch ein Rückstellelement 26 gezeigt, hier beispielhaft in der Form einer Spiralfeder. Diese ist, den Schaft 25 umschließend, zwischen einem ventilseitigen Anschlag in der Form eines fluiddurchlässigen Ringes 27 und einem tankauslassseitigen Anschlag 28 angeordnet. Beim Einschieben des Tanks in das nicht dargestellte Gerät kann beispielsweise ein Dorn gegen den Ring drücken, so dass das Ventil 23 in die hier dargestellte Position verschoben und die Dichtung 24 vom Dichtsitz 29 abgehoben ist, um den Durchgang für das aus der Filterpatrone in Richtung Gerät ausströmende Wasser freizugeben.

In dieser Darstellung der Figur 5 ist auch gut erkennbar, dass die Auslassöffnung des tankseitigen Filterpatronenanschlusses 8 so groß ist, dass zur Montage des Ventils 23 der Ventilkörper mit dem Dichtungssitz 30 voraus durch die äußere Öffnung des Geräteanschlusses 3 so eingeschoben werden kann, dass die Dichtung 24 von der Tankinnenseite an dem Dichtungssitz 30 befestigt werden kann. Hierin liegt ein weiterer wesentlicher Vorteil dieser erfindungsgemäß schräg ausgerichteten Anordnung des tankseitigen Filterpatronenanschlusses 8, der dadurch so konzipiert ist, dass er neben dieser einfachen Ventilmontage auch mit einfach zu fertigenden Spritzgussformen kostengünstig herstellbar ist.

Im Weiteren ist in der Darstellung 5 noch eine Trennwand 31 zur Abteilung bzw. Unterteilung des Innenraums der Filterpatrone 2 gezeigt, so dass zwei Kammern 32, 33 im Gehäuseinneren der Filterpatrone 2 ausgebildet werden. In diesen beiden Kammern 32, 33 kann je nach gewünschtem Anwendungsfall entsprechendes Filtermaterial, gegebenenfalls auch eine Kombination von Filtermaterialien mit verschiedenen Filterwirkungen untergebracht werden, eventuell auch ergänzt mit weiteren Zusätzen, wie z.B. Lebensmittelzusatzstoffe oder dergleichen.

Für die Entnahme des Wassers aus dem Tank 1 ist an einer möglichst tief gelegenen Stelle im Gehäuse 43 der Filterpatrone 2 ein Einlass 35 an der Filterpatrone 2 angeordnet, der den Leerlaufpegel 41 des Tanks 1 definiert, hier beispielhaft im Bodenbereich des Filterpatronengehäuses. Durch diese tiefe Ansaugstelle bei der Wasserentnahme aus dem Filtertank kann somit eine vollständige Entleerung des Wassertanks gewährleistet werden.

Die Figur 5a zeigt beispielhaft ausschnittsweise eine Querschnittsdarstellung der Dichtung 21 mit einem lippenartigen Dichtabschnitt 22, welcher sich bei einem im Inneren vorherrschenden Unterdruck gegen die ihm komplementäre Dichtfläche drückt und damit eine Erhöhung bzw. Verbesserung der Dichtwirkung dieser Dichtung gewährleistet. Grundsätzlich ist es aber auch vorstellbar, dass anstelle einer solchen "V"-Dichtung ein O-Ring für eine solche axiale Abdichtung zwischen dem tankseitigen Filterpatronenanschluss 8 und der ihm zugeordneten, komplementäre Dichtfläche der Filterpatrone 2 Verwendung findet.

Die Figur 6 zeigt schematisch eine perspektivische Ansicht auf die Filterpatrone 2 mit Schwerpunkt auf die Darstellung des schräg ausgerichteten, filterseitigen Tankanschlusses 13, darin angeordneter, axialer Dichtung 21 und deren leicht in Richtung der komplementären Berührfläche vorgespannten Dichtlippe 22.

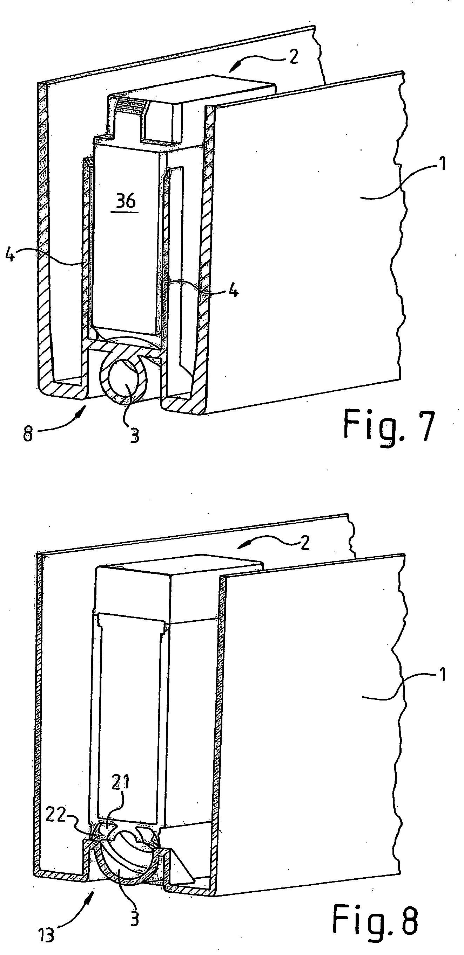

Die Figur 7 zeigt eine weitere Schnittdarstellung des Tanks 1 und der Filterpatrone 2, bei der die Stirnseite 17 des Tanks 1 weggeschnitten ist. Die Figur 8 zeigt eine weitere Schnittdarstellung, bei der Schnitt nach Figur 7 weiter nach hinten ins Innere des Tanks versetzt ist, so dass auch die betreffende Stirnseite 36 der Filterpatrone 2 weggeschnitten und der darunter liegende filterseitige Tankanschluss 13 mit seiner Dichtung 22 in geschnittener Darstellung dargestellt ist.

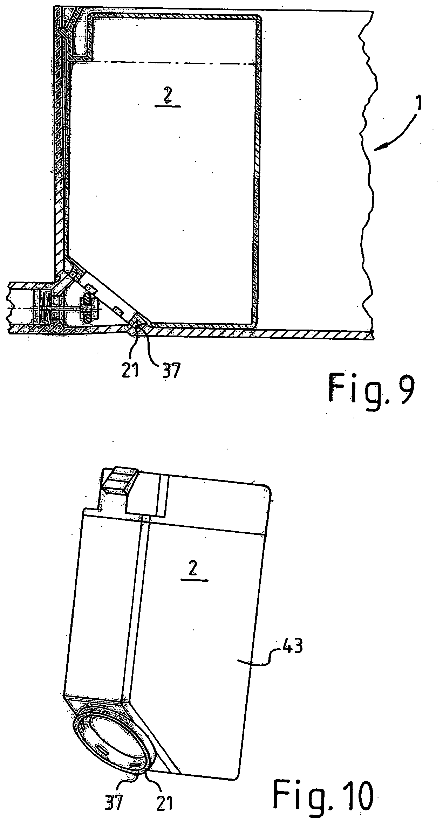

Die Figuren 9 und 10 entsprechen im Grunde den Darstellungen der Figuren 5 und 6, abweichend davon ist jedoch hier die Dichtung 21 in der Form eines O-Ringes 37 ausgebildet.

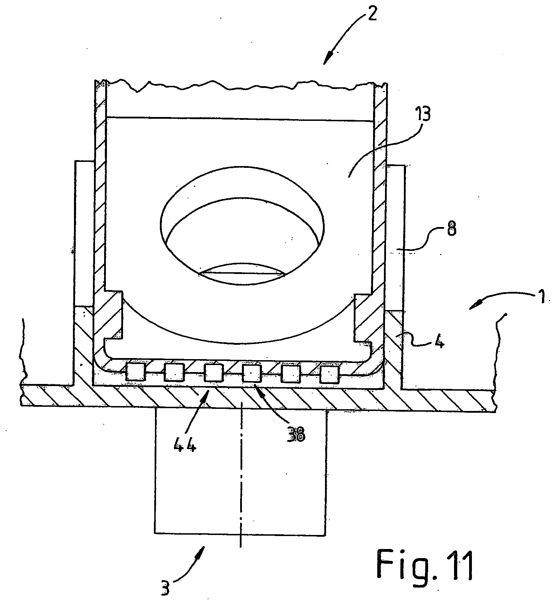

Die Figur 11 zeigt schematisch eine ausschnittsweise Darstellung in Draufsicht auf den Anschlussbereich der Filterpatrone 2 am Tank 1 mit tankseitigem Filterpatronenanschluss 8 und filterseitigem Tankanschluss 13 von der Innenseite her. Das wesentliche Merkmal an dieser Darstellung ist die mechanische Kodierung 38, hier beispielhaft in der Form einer Verzahnung gezeigt. Mit einer solchen mechanischen Kodierung kann sichergestellt werden, dass nur für den jeweiligen Anwendungsfall vorgesehene Filterpatronen verwendet werden können. Neben einer wie hier beispielhaft dargestellten verzahnten Kodierung sind aber durchaus noch andere Formen von Kodierungen in der Form von axialen und/oder radialen Kodierungsstrukturen vorstellbar. Eine solche Kodierung kann zwischen dem tankseitigen Filterpatronenanschluss 8 und der Filterpatrone 2 und/oder der Dichtung 21 oder auch zwischen der Dichtung 21 und der Filterpatrone 2 ausgebildet sein. Auch Kombinationen solcher Kodierungen sind vorstellbar und erweitern die Gesamtzahl der möglichen Kodierungen wiederum ohne großen zusätzlichen Aufwand.

Weiter denkbar ist, dass diese Kodierung 38 auch wenigstens teilweise zugleich als Fixierungselement 44 zur Befestigung der Filterpatrone 2 fungiert.

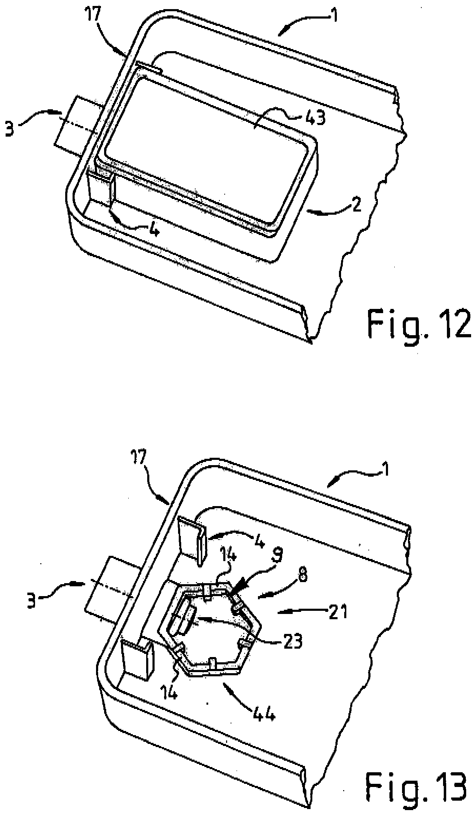

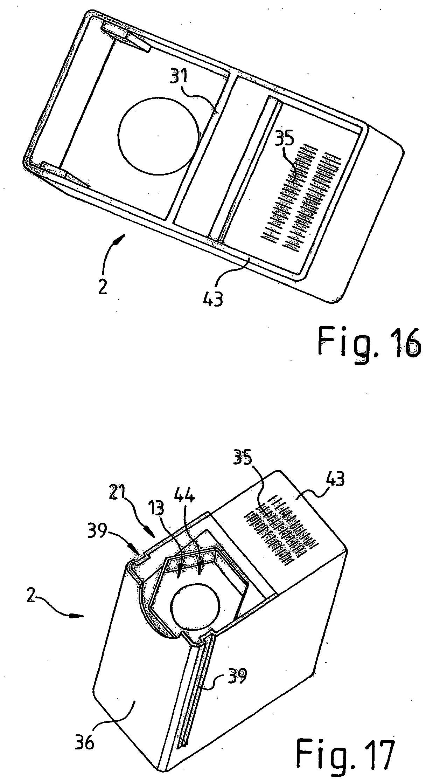

Neben dieser ersten beispielhaft dargestellten Ausführungsform zeigen die Figuren 12 bis 17 einen weiteren möglichen Aufbau eines tankseitigen Filterpatronenanschlusses mit schräger Ausrichtung gegenüber einer vertikalen Ebene in Zusammenwirkung mit einem ebenfalls schräg ausgerichteten, filterseitigen Tankanschluss 13. Der Einfachheit halber sind für gleiche Komponenten die gleichen Bezugszeichen, wie in der ersten Ausführungsform benannt. Wesentlich ist hierbei die beispielhaft dargestellte, sechskantige Form des tankseitigen Filterpatronenanschlusses 8 in der Darstellung der Figur 13 bzw. für den filterseitigen Tankanschluss 13 in der Darstellung der Figur 17 als perspektivische Unteransicht der Filterpatrone 2. Diese beiden Sechskante 44 greifen beim Einschieben der Filterpatrone 2 in den Tank 1 entlang der Filterpatronenhalterung und/oder -führung 4 formschlüssig und dichtend ineinander. Damit können sowohl eine formschlüssige Verbindung der beiden Anschlüsse miteinander als auch eine Dichtung zwischen ihnen realisiert werden, und zugleich weiterhin auch eine mechanische Kodierung in einer speziellen Ausführungsform. Durch Abänderung dieser Sechskantkontur und/oder durch Ergänzung mit einer weiteren Kontur kann auch eine derartige Kodierung für verschiedene Anwendungsfälle variiert werden.

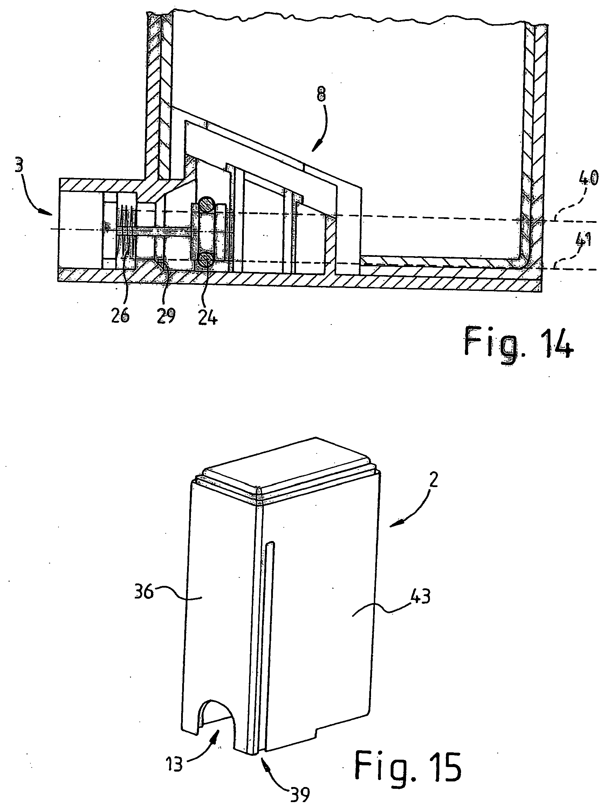

Im Einzelnen zeigt die Figur 12 schematisch eine perspektivische Draufsicht auf einen Tank 1 mit darin eingesetzter Filterpatrone 2, die Figur 13 ebenfalls schematisch eine perspektivische Draufsicht auf einen Tank 1, jedoch ohne eingesetzte Filterpatrone 2, die Figur 14 schematisch eine abschnittsweise Darstellung eines Längsschnittes durch diese Ausführungsform in entsprechend zur Darstellung der Figur 5.

Die Figur 15 zeigt schematisch eine perspektivische Draufsicht auf einen Filter 2, die Figur 16 schematisch eine perspektivische Draufsicht auf eine Filterpatrone 2 mit abgenommenem Deckel, erkennbarer Trennwand 31 und Wassereinlass 35. Die Figur 17 zeigt schematisch in perspektivischer Unteransicht eine Filterpatrone 2 nach dieser zweiten Ausführungsform mit im Querschnitt als Sechskant ausgebildetem, filterseitigem Tankanschluss. In den Darstellungen der Figur 15 und der Figur 17 sind die patronenseitigen Führungselemente 39, hier in der Form von Längsnuten, als komplementäre Elemente für die Filterpatronenhalterung und/oder -führung 4 des Tanks 1 gezeigt.

In der Darstellung der Figur 14 ist das mögliche Wasserniveau 41 im Tank bei einer Entleerung mit eingesetzter Filterpatrone gezeigt und ohne eingesetzte Filterpatrone durch die Linie 40.

Die Ausrichtung der Schräge bezüglich einer vertikalen Ebene kann vorzugsweise einen Winkel von 30 bis 60° aufweisen. Für den Zugang zum Geräteanschluss 3 von der Innenseite des Tanks ist der tankseitige Filterpatronenanschluss 8 vorzugsweise jedoch so groß, dass der Ventilkörper des Ventils 23 von außen eingeschoben und von innen die Dichtung 24 an dessen Dichtungssitz 30 angebracht werden kann. Die Festsetzung der Filterpatrone 2 im Tank 1 ist vorzugsweise so realisiert, dass bei Einrasten der filterpatronenseitigen Fixierung 6 in die stirnseitige Ausnehmung 7 des Tanks 1 ein zur Abdichtung der beiden komplementären Anlageflächen des tankseitigen Filterpatronenanschlusses 8 und des filterpatronenseitigen Tankanschlusses 13 ausreichend großer Andruck sichergestellt ist, und zwar sowohl mit als auch ohne separat ausgebildeter, zwischenliegender Dichtung 21. Eine gewisse Bandbreite für einen Toleranzbereich stellt hierzu die besonders vorteilhafte, schräge Ausrichtung dieser beiden Anschlüsse aufgrund ihrer geometrischen Gegebenheiten zur Verfügung, die eine parallele Verschiebung der beiden Anlageflächen zueinander bei zuverlässiger Abdichtung gewährleistet.

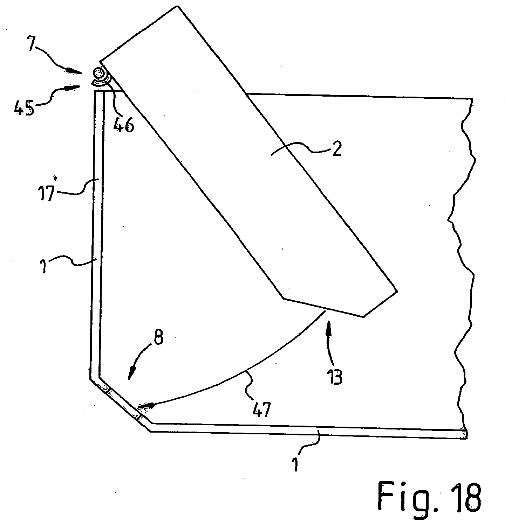

Die Figur 18 zeigt eine weitere Befestigungs- bzw. Montagemöglichkeit für die Filterpatrone 2 im Tank 1, in der Form einer schwenkbaren Filterhalterung und/oder -führung 45 als ausschnittsweise Schnittdarstellung. Diese kann z.B. eine Ausnehmung 7 in einer Tankwand 17 und ein entsprechend komplementär geformtes Eingriffselement 46 umfassen. Durch das Zusammenfügen dieser beiden tank- und filterseitigen Schwenkelemente 7, 46 kann die Filterpatrone 2 entlang der durch den Pfeil 47 beschriebenen Bewegungskurve ausreichend genau zum bereits oben ausführlich dargelegten, benutzungsgemäßen Anschluss an den Tank 1 geführt werden. Denkbar sind aber auch noch andere Schwenkkonstruktionen, z.B. ein Vertauschen der beiden Elemente 7 und 46, und/oder auch die Ausbildung des Schwenkpunktes bzw. der Schwenkachse im gegenüberliegenden Filterpatronen-Befestigungsbereich im Tank 1, wie am Tankboden und/oder im Anschlussbereich 8, 13. Aber auch ein seitliches Einschwenken nach einer gegebenenfalls vertikalen oder horizontalen Führungsbewegung könnte eine einfache und zuverlässige Montage- bzw. Demontagemöglichkeit für die Filterpatrone 2 bieten.

### Bezugszeichenliste:

- 1: Tank
- 2: Filterpatrone
- 3: Geräteanschluss
- 4: Filterpatronenhalterung und/oder -führung
- 5: Stirnwand
- 6: Fixierung
- 7: Ausnehmung
- 8: Filterpatronenanschluss
- 9: Ablaufrand
- 10: vertikale Ebene
- 11: Ablaufrand-Ebene
- 12: Führungsabschnitt
- 13: filterseitiger Tankanschluss
- 14: Anlagefläche
- 15: Anlagefläche
- 16: Winkel
- 17: Stirnseite
- 18: Auslassöffnung
- 19: Auslassöffnung
- 20: Schulter
- 21: Dichtung
- 22: Dichtungsabschnitt
- 23: Ventil
- 24: Dichtung
- 25: Schaft
- 26: Rückstellelement
- 27: Ring
- 28: Anschlag
- 29: Dichtsitz
- 30: Dichtungssitz
- 31: Trennwand
- 32: Kammer
- 33: Kammer
- 34: Filtermaterial
- 35: Einlass
- 36: Stirnseite
- 37: O-Ring
- 38: Kodierung
- 39: Führung
- 40: Linie
- 41: Linie
- 42: Dichtfläche
- 43: Gehäuse
- 44: Fixierung
- 45: Filterpatronenhalterund und/oder -führung
- 46: Eingriffselement
- 47: Pfeil

## Patentansprüche

1. Tank mit Filterpatrone für flüssigkeitsführende Geräte, insbesondere wasserführende Haushaltsgeräte wie Getränkeautomaten, insbesondere Kaffeeautomaten, Trinkwasserspender, Koch- und Backgeräte, Dampfgeräte, insbesondere Dampfbügeleisen, Dampfreiniger, Hochdruckreiniger, Luftreiniger und -konditionierer oder dgl., wobei die Filterpatrone innenseitig vertikal im Tank (1) eingesetzt ist, der Tank einen Filterpatronenanschluss (8) und einen überwiegend horizontal ausgerichteten Geräteanschluss (3) aufweist und wobei der Geräteanschluss (3) mit einer überwiegend horizontalen Anschlussbewegung anschließbar mit für die Filterpatrone (2) vorgesehenen Anschlusselementen verbunden ist, **dadurch gekennzeichnet, dass** der tankseitige Filterpatronenanschluss (8) einen Ablaufrand (9) aufweist, der in Bezug zu einer vertikal ausgerichteten Stirnwand (5) des Tanks (1) schräg ausgerichtet ist und in Zusammenwirkung mit einem ebenfalls schräg ausgerichteten filterseitigen Tankanschluss (13) der Filterpatrone (2) steht.

2. Tank mit Filterpatrone nach Anspruch 1, **dadurch gekennzeichnet, dass** eine Filterpatronenhalterung und/oder Filterpatronenführung (4) mit einem überwiegend vertikal ausgerichteten Führungsabschnitt (12) vorgesehen ist.

3. Tank mit Filterpatrone nach einem der vorgenannten Ansprüche, **dadurch gekennzeichnet, dass** eine der Filterpatrone (2) zum Einsetzen und/oder Entnehmen eine Schwenkbewegung aufprägende Filterpatronenhalterung und/oder Filterpatronenführung (45) vorgesehen ist.

4. Tank mit Filterpatrone nach einem der vorgenannten Ansprüche, **dadurch gekennzeichnet, dass** der tankseitige Filterpatronenanschluss (8) eine plane Anlagefläche (14) zur Ausbildung einer schräg ausgerichteten Dichtfläche (42) aufweist.

5. Tank mit Filterpatrone nach einem der vorgenannten Ansprüche, **dadurch gekennzeichnet, dass** zwischen dem tankseitigen Filterpatronenanschluss (8) und dem filterseitigen Tankanschluss (13) einer in den Tank (1) eingesetzten Filterpatrone (2) eine Dichtung (21) vorgesehen ist.

6. Tank mit Filterpatrone nach Anspruch 5, **dadurch gekennzeichnet, dass** die Dichtung (21) mindestens einen elastisch verformbaren Abschnitt (22) aufweist.

7. Tank mit Filterpatrone nach einem der vorgenannten Ansprüche, **dadurch gekennzeichnet, dass** eine mechanische Kodierungsstruktur (38) zwischen dem tankseitigen Filterpatronenanschluss (8) und der Filterpatrone (2) und/oder der Dichtung (21) vorgesehen ist.

8. Tank mit Filterpatrone nach einem der Ansprüche 5 bis 7, **dadurch gekennzeichnet, dass** eine mechanische Kodierungsstruktur (38) zwischen der Dichtung (21) und der Filterpatrone (2) vorgesehen ist.

9. Tank mit Filterpatrone nach Anspruch 8, **dadurch gekennzeichnet, dass** die Kodierungsstruktur (38) wenigstens teilweise zugleich als Fixierungselement (44) zur Befestigung der Filterpatrone (2) ausgebildet ist.

10. Tank mit Filterpatrone nach Anspruch 9, **dadurch gekennzeichnet, dass** der tankseitige Filteranschluss (8) und der filterseitige Tankanschluss (13) eine sechskantige Form aufweisen und wobei diese beiden Sechskante (44) beim Einschieben der Filterpatrone (2) in den Tank (1) entlang der Filterpatronenhalterung und/oder -führung (4) formschlüssig und dichtend ineinander greifen.

11. Tank mit Filterpatrone nach einem der Ansprüche 7 bis 10, **dadurch gekennzeichnet, dass** der filterseitige Tankanschluss (8) als Kodierungsstruktur (38) und als Formdichtung (21) mit entsprechend ausgebildeter Umfangsfläche ausgebildet ist.

12. Tank mit Filterpatrone nach einem der vorgenannten Ansprüche, **dadurch gekennzeichnet, dass** an der Filterpatrone (2) ein im Aufstromverfahren und/oder ein im Abstromverfahren wirksamer Filterabschnitt (32, 33) vorgesehen ist.

13. Tank mit Filterpatrone nach einem der vorgenannten Ansprüche, **dadurch gekennzeichnet, dass** an der Filterpatrone (2) ein im Horizontal- und/oder Tangentialstrom-Verfahren wirksamer Filterabschnitt vorgesehen ist.

14. Gerät, insbesondere wasserführendes Haushaltsgerät oder Gerät zur Aufbereitung von Speisen und/oder Getränken, wie Getränkeautomaten, insbesondere Kaffeeautomaten, Trinkwasserspender, Koch- und Backgeräte, Dampf- und/oder Hochdruckreiniger, Luftreiniger und- konditionierer oder dergleichen, das einen Tank mit Filterpatrone nach einem der vorgenannten Ansprüche aufweist.

## Claims

1. A tank with a filter cartridge for liquid-bearing appliances, in particular water-bearing household appliances, such as beverage machines, in particular coffee machines, drinking-water dispensers, cooking and baking appliances, steam appliances, in particular steam irons, steam cleaners, high-pressure washers, air purifiers and conditioners or the like, wherein the filter cartridge can be inserted vertically on the inside in the tank (1), which tank has a filter cartridge connection (8) and a predominantly horizontally aligned appliance connection (3), and wherein the appliance connection (3), which can be connected by a predominantly horizontal connection movement, is connected to connection elements provided for the filter cartridge (2), **characterized in that** the filter cartridge connection (8) on the tank side has an outlet edge (9), which is aligned obliquely in relation to a vertically aligned end wall (5) of the tank (1) and interacts with a tank connection (13) of the filter cartridge (2) also aligned obliquely on the filter side.

2. A tank with a filter cartridge according to Claim 1, **characterized in that** a filter cartridge holder and/or filter cartridge guide (4) with a predominantly vertically aligned guide section (12) is provided.

3. A tank with a filter cartridge according to any one of the preceding claims, **characterized in that** a filter cartridge holder and/or filter cartridge guide (45) impressing a pivotal motion on the filter cartridge (2) is provided for the insertion and removal.

4. A tank with a filter cartridge according to any one of the aforementioned claims, **characterized in that** the filter cartridge connection (8) on the tank side has a plane contact surface (14) for the formation of an obliquely aligned sealing surface (42).

5. A tank with a filter cartridge according to any one of the aforementioned claims, **characterized in that** between the tank-side filter cartridge connection (8) and the filter-side tank connection (13) of a filter cartridge (2) inserted in the tank (1) a seal (21) is provided.

6. A tank with a filter cartridge according to Claim 5, **characterized in that** the seal (21) has at least one elastically deformable section (22).

7. A tank with a filter cartridge according to any one of the aforementioned claims, **characterized in that** a mechanical coding structure (38) is provided between the tank-side filter cartridge connection (8) and the filter cartridge (2) ando/r the seal (21).

8. A tank with a filter cartridge according to any one of Claims 5 or 7, **characterized in that** a mechanical coding structure (38) is provided between the seal (21) and the filter cartridge (2).

9. A tank with a filter cartridge according to Claim 8, **characterized in that** the coding structure (38) is at least partially designed at the same time as a fixing element (44) for securing the filter cartridge (2).

10. A tank with a filter cartridge according to Claim 9, **characterized in that** the tank-side filter connection (8) and the filter-side tank connection (13) have a hexagonal form and wherein these two hexagons (44) upon insertion of the filter cartridge (2) into the tank (1) engage with each other in a positive and sealing manner along the filter cartridge holder and/or guide (4).

11. A tank with a filter cartridge according to any one of Claims 7 to 10, **characterized in that** the filter-side tank connection (8) is designed as a coding structure (38) and as a shaped seal (21) with correspondingly designed circumferential surface.

12. A tank with a filter cartridge according to any one of the aforementioned claims, **characterized in that** on the filter cartridge (2) a filter section (32, 33) is provided which is effective in an upward flow process and/or one which is effective in a downward flow process.

13. A tank with a filter cartridge according to any one of the aforementioned claims, **characterized in that** on the filter cartridge (2) a filter section is provided which is effective in a horizontal and/or tangential flow process.

14. An appliance, in particular a water-bearing household appliance or an appliance for preparing food and/or drinks, such as beverage machines, in particular coffee machines, drinking-water dispensers, cooking and baking appliances, steam cleaners and/or high-pressure washers, air purifiers and conditioners or the like, which has a tank with a filter cartridge according to any one of the aforementioned claims.

## Revendications

1. Réservoir avec cartouche filtrante pour des appareils transportant des liquides, en particulier des appareils ménagers transportant de l'eau tels que des distributeurs automatiques de boissons, en particulier des cafetières automatiques, des distributeurs d'eau potable, des appareils de cuisson, des appareils à vapeur, en particulier des fers à repasser à vapeur, des nettoyeurs à vapeur, des nettoyeurs haute pression, des épurateurs et conditionneurs d'air ou similaires, la cartouche filtrante étant introduite côté intérieur verticalement dans le réservoir (1), le réservoir présentant un raccord de cartouche filtrante (8) et un raccord d'appareil (3) orienté principalement horizontalement, et le raccord d'appareil (3) étant raccordé à des éléments de raccordement prévus pour la cartouche filtrante (2) et pouvant être reliés par un mouvement de jonction principalement horizontal, **caractérisé en ce que** raccord de cartouche filtrante (8) côté réservoir présente un bord d'écoulement (9) qui est orienté obliquement par rapport à une paroi frontale (5) du réservoir (1) orientée verticalement et est en interaction avec un raccord de réservoir (13), côté filtre, de la cartouche filtrante (2) qui est également orienté obliquement.

2. Réservoir avec cartouche filtrante selon la revendication 1, **caractérisé en ce qu'**il est prévu un élément de retenue de cartouche filtrante et/ou guidage de cartouche filtrante (4) avec un tronçon de guidage (12) orienté principalement verticalement.

3. Réservoir avec cartouche filtrante selon l'une des revendications précédentes, **caractérisé en ce qu'**il est prévu un élément de retenue de cartouche filtrante (2) et/ou guidage de cartouche filtrante (45) conférant à la cartouche filtrante un mouvement pivotant pour l'introduction et/ou l'enlèvement.

4. Réservoir avec cartouche filtrante selon l'une des revendications précédentes, **caractérisé en ce que** le raccord de cartouche filtrante (8) côté réservoir présente une surface d'appui (14) plane pour la constitution d'une surface d'étanchéité (42) orientée obliquement.

5. Réservoir avec cartouche filtrante selon l'une des revendications précédentes, **caractérisé en ce qu'**il est prévu un joint d'étanchéité (21) entre le raccord de cartouche filtrante (8) côté réservoir et le raccord de réservoir (13), côté filtre, d'une cartouche filtrante (2) introduite dans le réservoir (1).

6. Réservoir avec cartouche filtrante selon la revendication 5, **caractérisé en ce que** le joint d'étanchéité (21) présente au moins un tronçon (22) élastiquement déformable.

7. Réservoir avec cartouche filtrante selon l'une des revendications précédentes, **caractérisé en ce qu'**il est prévu une structure de codage (38) mécanique entre le raccord de cartouche filtrante (8) côté réservoir et la cartouche filtrante (2) et/ou le joint d'étanchéité (21).

8. Réservoir avec cartouche filtrante selon l'une des revendications 5 à 7, **caractérisé en ce qu'**il est prévu une structure de codage (38) mécanique entre le joint d'étanchéité (21) et la cartouche filtrante (2).

9. Réservoir avec cartouche filtrante selon la revendication 8, **caractérisé en ce que** la structure de codage (38) est constituée au moins partiellement simultanément en tant qu'élément de fixation (44) pour la fixation de la cartouche filtrante (2).

10. Réservoir avec cartouche filtrante selon la revendication 9, **caractérisé en ce que** le raccord de cartouche filtrante (8) côté réservoir et le raccord de réservoir (13) côté filtre présentent une forme hexagonale et, lors de l'insertion de la cartouche filtrante (2) dans le réservoir (1), ces deux hexagones (44) engrenant l'un dans l'autre par liaison de forme et de façon étanche, le long de l'élément de retenue de cartouche filtrante et/ou du guidage de cartouche filtrante (4).

11. Réservoir avec cartouche filtrante selon l'une des revendications 7 à 10, **caractérisé en ce que** le raccord de cartouche filtrante (8) côté filtre est constitué en tant que structure de codage (38) et en tant que joint d'étanchéité profilé (21) avec une surface circonférentielle constituée de façon correspondante.

12. Réservoir avec cartouche filtrante selon l'une des revendications précédentes, **caractérisé en ce que**, sur la cartouche filtrante (2), il est prévu un tronçon de filtre (32, 33) actif dans le procédé de flux montant et/ou dans le procédé de flux descendant.

13. Réservoir avec cartouche filtrante selon l'une des revendications précédentes, **caractérisé en ce que**, sur la cartouche filtrante (2), il est prévu un tronçon de filtre actif dans le procédé de flux horizontal et/ou tangentiel.

14. Appareil, en particulier appareil ménager transportant de l'eau ou appareil destiné au traitement de plats et/ou de boissons, tel que des distributeurs automatiques de boissons, en particulier des cafetières automatiques, des distributeurs d'eau potable, des appareils de cuisson, des nettoyeurs à vapeur et/ou à haute pression, des épurateurs et des conditionneurs d'air ou similaires, qui présente un réservoir avec cartouche filtrante selon l'une des revendications précédentes.
